# FASCICULE DE BREVET EUROPEEN

(11) **EP 2 827 616 B1**
(45) Date de publication et mention de la délivrance du brevet: **24.07.2019**
(21) Numéro de dépôt: 14151093.3
(22) Date de dépôt: 14.01.2014
(51) Int. Cl.: H04B 1/3822, H04W 4/80, G08C 17/02, H04B 7/185, H04N 21/214

(54) **Système de gestion d'un environnement cabine dans une plateforme, et procédé de gestion associée**
Verwaltungsssystem von einer Kabinenumgebung in einem Plattform und entsprechendes Verwaltungsverfahren
Management system of an cabin environment in a platform and associated management method

(30) Priorité: 15.07.2013 FR 1301665
(43) Date de publication de la demande: 21.01.2015
(73) Titulaire: Dassault Aviation, 75008 Paris (FR)
(72) Inventeur: Hennequin, Arnaud, 92150 SURESNES (FR); Abrassart, Hugues, 92210 SAINT CLOUD (FR)
(74) Mandataire: Lavoix

(56) Documents cités:
- WO-A1-2012/162381
- US-A1- 2010 224 727

## Description

La présente invention concerne un système de gestion d'un environnement cabine dans une plate-forme ,selon la revendication 1 et un procédé de gestion d'un environnement cabine selon la revendication 15.

WO 2012/162381 et US 2010/0224727 décrivent des systèmes de gestion d'environnement cabine comprenant un dispositif électronique mobile..

Un tel système est destiné à être mis en oeuvre par exemple dans une cabine d'aéronef, pour permettre à un occupant de la cabine de piloter et de personnaliser l'utilisation d'équipements fonctionnels de la cabine.

Les équipements fonctionnels sont par exemple un dispositif d'éclairage, un dispositif de restitution de données audio et/ou vidéo, un dispositif de climatisation, un dispositif d'obturation d'un hublot, un dispositif de communication avec l'intérieur ou l'extérieur de l'aéronef et/ou un dispositif de visualisation extérieure.

Les aéronefs modernes sont équipés de nombreux équipements fonctionnels permettant de modifier l'environnement cabine, pour permettre à un occupant de l'aéronef de disposer du confort nécessaire durant un vol.

En particulier, l'occupant de l'aéronef souhaite généralement évoluer dans une atmosphère régulée en température, avec une luminosité contrôlée en fonction de l'heure ou de la phase de vol.

L'occupant de l'aéronef souhaite aussi généralement disposer d'occupations à terre ou pendant le vol, par exemple en écoutant de la musique, en regardant des vidéos, en communiquant avec l'extérieur ou en observant l'environnement extérieur à l'aéronef à partir de caméras.

Pour gérer son environnement, l'occupant de l'aéronef dispose généralement, sur son siège, ou au voisinage de celui-ci, d'une ou plusieurs interfaces utilisateur permettant la commande des équipements fonctionnels.

Ces interfaces peuvent prendre la forme de boutons de commande physiques, par exemple disposés sur un accoudoir, ou d'interfaces écran, par exemple disposés à l'arrière du siège situé devant l'occupant.

Dans certains cas, l'occupant de l'aéronef souhaite que ses préférences de réglage des équipements fonctionnels soient prédéterminées et personnalisées, pour qu'il retrouve facilement l'environnement souhaité dans l'aéronef.

À cet effet, WO 2012/162381 décrit un système de gestion, dans lequel l'occupant de l'aéronef définit préalablement ses préférences de réglage du dispositif de restitution audio et/ou vidéo, à l'aide d'une interface.

Puis, une unité de traitement présente au sein du système engendre un code-barres bidimensionnel encodant des informations représentatives des préférences de réglage, qui est imprimé ou téléchargé sur un dispositif portable.

Lors de son installation dans l'aéronef, l'occupant passe le code-barres sur un lecteur présent dans le dispositif de restitution audio et/ou vidéo. Une unité de traitement du dispositif de restitution décode l'information représentative et pilote en conséquence le dispositif de restitution.

Un tel système présente l'avantage de s'adapter à l'occupant de l'aéronef. Il est cependant fastidieux à mettre en oeuvre et reste peu adaptable pour le pilotage d'autres équipements fonctionnels.

Un but de l'invention est donc d'obtenir un système de gestion d'un environnement dans une cabine d'aéronef, qui s'adapte facilement aux préférences d'un occupant de la cabine, tout en étant simple à mettre en oeuvre et facilement adaptable à une grande variété d'équipements fonctionnels.

À cet effet, l'invention a pour objet un système selon la revendication 1.

Le système selon l'invention peut comprendre l'une ou plusieurs des caractéristiques des revendications 2 à 14 .

L'invention a également pour objet un procédé de gestion d'un environnement cabine dans une plateforme selon la revendication 15.

L'invention sera mieux comprise à la lecture de la description qui va suivre, donnée uniquement à titre d'exemple, et faite en se référant aux dessins annexes, sur lesquels :
- la figure 1 est une vue schématique en perspective partielle de l'environnement local d'un occupant d'une cabine d'aéronef comprenant une pluralité d'équipements fonctionnels et un système de gestion selon l'invention ;
- la figure 2 est une vue schématique de dessus, illustrant la cabine d'aéronef munie d'une pluralité de bornes locales associées à des localisations choisies dans la cabine ;
- la figure 3 est un schéma fonctionnel illustrant la structure du système de gestion selon l'invention ;
- la figure 4 est une vue schématique de l'ensemble d'appariement du système de la figure 3 ;
- la figure 5 est une vue analogue à la figure 4 d'une variante ou d'un complément d'ensemble d'appariement ;
- les figures 6 à 8 illustrent des écrans d'interface d'une borne locale dans différentes configurations d'utilisation ;
- la figure 9 illustre un dispositif électronique mobile présentant une interface munie d'une pluralité d'icônes de mise en oeuvre d'applications logicielles de commande d'équipements fonctionnels ;
- les figures 10 à 14 illustrent plusieurs écrans de commande susceptibles d'être affichés sur le dispositif électronique mobile lors de la mise en oeuvre des applications de commande ;
- les figures 15 à 17 sont des vues analogues à la figure 4 d'une variante d'ensemble d'appariement du système de la figure 3.

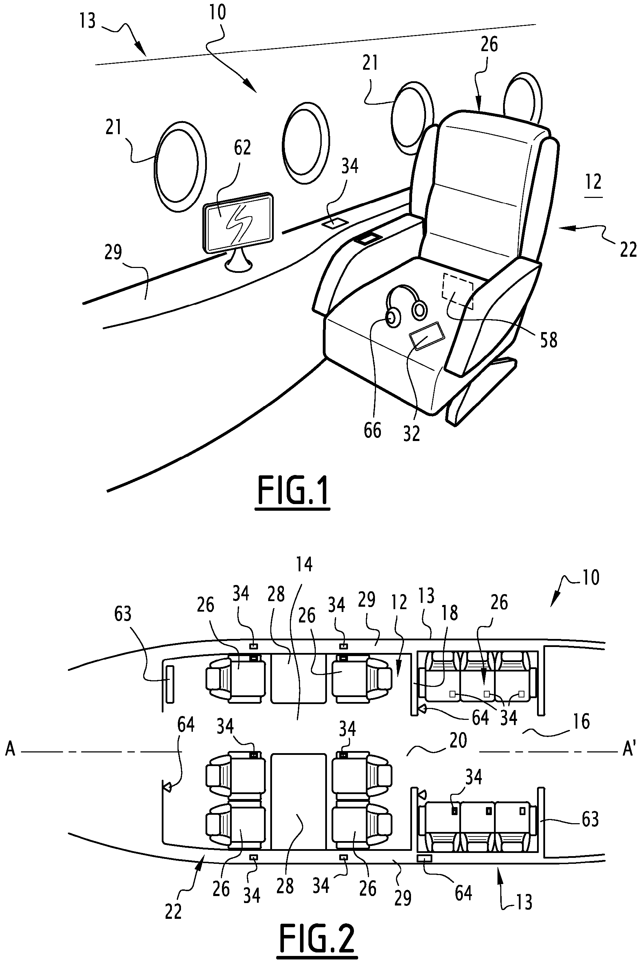

Une première plate-forme 10 de transport selon l'invention est illustrée par les figures 1 et 2.

La première plate-forme 10 est avantageusement un aéronef, notamment un avion civil destiné à transporter des passagers. En variante, la plate-forme est un véhicule terrestre, tel qu'un véhicule ferroviaire ou automobile, ou encore un engin naval.

Comme illustré par la figure 2, la plate-forme 10 comporte une cabine 12, destinée à loger au moins un occupant de la plate-forme 10, notamment un passager de la plate-forme 10.

La cabine 12 comporte une paroi extérieure 13 qui définit une pluralité de compartiments 14, 16, de préférence séparés les uns des autres par au moins une cloison 18.

Un passage 20 de circulation est ménagé entre les compartiments 14, 16 pour permettre le passage d'un occupant d'un compartiment 14, 16 à un autre compartiment 16, 14.

Dans l'exemple représenté sur la figure 2, la cabine 12 définit un compartiment avant 14 et un compartiment arrière 16, dans le sens normal de circulation de la plate-forme 10, suivant un axe longitudinal A-A'.

Par ailleurs, comme illustré par la figure 1, la paroi extérieure 13 délimite des hublots 21 permettant l'observation de l'environnement extérieur à la cabine 12.

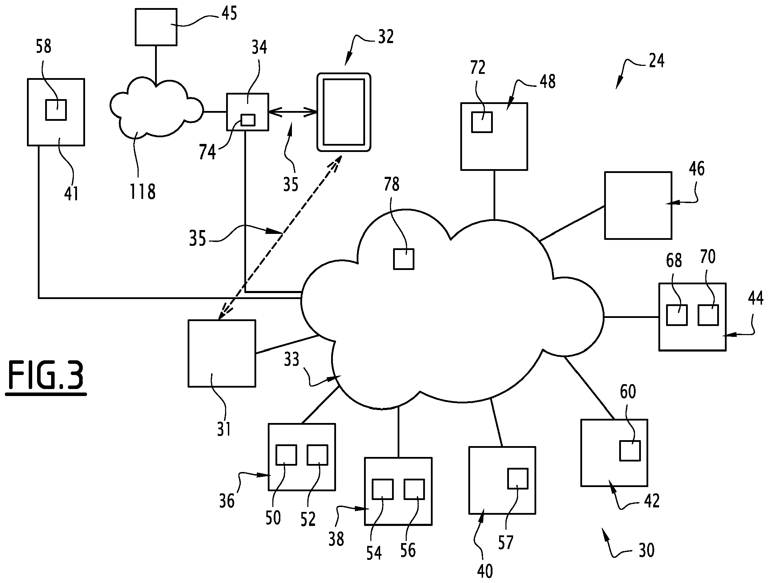

La plate-forme 10 comporte en outre un mobilier 22, placé dans la cabine 12 pour le confort de l'occupant, et un système 24 de gestion d'un environnement cabine selon l'invention, représenté schématiquement sur la figure 3.

Dans cet exemple, le mobilier 22 comporte une pluralité de sièges 26 répartis dans les compartiments 14, 16 de la cabine 12. Chaque siège 26 est destiné à recevoir un ou plusieurs occupants de la cabine 12.

Le mobilier 22 comporte en outre dans cet exemple des tables 28 et des supports latéraux 29.

En référence à la figure 3, le système 24 de gestion d'environnement cabine comporte un ensemble d'équipements fonctionnels 30 de gestion de l'environnement cabine, propres à être pilotés par un occupant de la cabine 12. Il comporte avantageusement, un réseau de communication 33 entre les équipements fonctionnels 30, et une unité 31 de pilotage destinée à être actionnée par l'équipage de l'aéronef

Le système de gestion 24 comporte en outre au moins un dispositif électronique mobile 32, destiné au pilotage des équipements fonctionnels 30, et une pluralité de bornes locales 34 (dont une seule est représentée sur la figure 3) destinées à s'apparier avec un dispositif électronique mobile 32, chaque borne locale 34 étant associée à une localisation prédéfinie dans la cabine 12, en particulier à un siège 26 donné dans la cabine 12. Avantageusement, l'unité de pilotage 31 forme également une borne destinée à s'apparier avec un dispositif électronique mobile 32.

Selon l'invention, le système 24 de gestion comporte en outre un ensemble 35 d'appariement du dispositif électronique mobile 32 avec chaque borne locale 31, 34, pour la transmission d'une donnée d'identification de la localisation de la borne locale 31, 34 au dispositif électronique mobile 32.

Les équipements fonctionnels 30 sont destinés à modifier et contrôler l'environnement cabine, localement ou sur toute la cabine 12, afin de contribuer au confort de l'occupant de la cabine 12.

L'environnement cabine s'entend notamment comme une l'atmosphère de la cabine (température, luminosité...), ou encore comme le son et/ou l'image perçus par l'occupant de la cabine (musique, vidéo, vision extérieure...).

Le système de gestion 24 regroupe donc les fonctionnalités associées à un système de gestion de cabine (« cabin management system » en anglais) apte à piloter l'atmosphère de la cabine et à un système de divertissement à bord (« in-flight entertainment system ») apte à piloter le son et/ou l'image perçue par l'occupant de la cabine.

À cet effet, les équipements fonctionnels 30 comprennent par exemple un équipement 36 de pilotage de la température cabine, un équipement 38 de pilotage de l'éclairage cabine, un équipement 40 de pilotage de l'obturation des hublots 21, et/ou un équipement motorisé 41 de modification de la configuration de chaque siège.

Pour l'agrément du passager, les équipements fonctionnels 30 comprennent par exemple un équipement 42 de restitution audio et/ou vidéo et/ou de jeux, un équipement 44 de vision extérieure par caméra et/ou un équipement 45 de restitution audio individuel associé à chaque siège 26.

Les équipements fonctionnels 30 comportent avantageusement un équipement 46 de communication extérieure, par exemple par téléphonie, et un équipement 48 de communication intérieure, permettant une communication entre l'équipage de la plate-forme 10 et les occupants de la cabine 12.

L'équipement de pilotage 36 de la température cabine comporte de préférence des unités locales 50, 52 de réglage de la température dans chaque compartiment 14, 16. Ces unités 50, 52 sont propres à être pilotées sélectivement ou conjointement pour régler individuellement la température dans chaque compartiment 14, 16.

L'équipement de pilotage 38 de l'éclairage comporte également des unités locales 54, 56 de réglage de la luminosité, et avantageusement de la couleur de l'éclairage dans chaque compartiment 14, 16. Ces unités 54, 56 sont propres à être pilotées sélectivement ou conjointement pour régler individuellement la luminosité et la couleur de l'éclairage dans chaque compartiment 14, 16.

L'équipement de pilotage 40 de l'obturation des hublots 21 comporte, pour chaque hublot 21, une unité de pilotage 57 de l'obturation du hublot 21. Cette unité de pilotage comporte par exemple un volet d'obturation, et un mécanisme de déplacement du volet d'obturation. En variante, l'unité de pilotage 57 comporte un dispositif électrique d'obturation du hublot (par exemple un rideau) et / ou un dispositf électrochromatique d'obturation du hublot.

Les unités de pilotage 57 des hublots 21 sont propres à être pilotées sélectivement ou conjointement pour obturer de manière individualisée ou collective les hublots 21.

L'équipement motorisé 41 de réglage de la configuration du siège comprend une unité de pilotage 58 associée à chaque siège 26, pour modifier sélectivement l'inclinaison du siège 26.

L'équipement 42 de restitution audio et/ou vidéo comporte au moins une unité centrale 60 de stockage de contenu, par exemple audio et/ou vidéo et/ou de jeux et/ou de magazines et de livres électroniques, une pluralité d'écrans 62, 63 (visibles sur la figure 1 et la figure 2), propres à afficher un contenu vidéo et/ou un jeu et une pluralité de haut-parleurs 64 collectifs, les écrans 62, 63 et les haut-parleurs 64 étant répartis dans les compartiments 14, 16 de la cabine.

Avantageusement, l'équipement de restitution 42 comporte au moins un écran 62 associé à chaque siège 26, et au moins un écran 63 collectif disposé dans chaque compartiment 14, 16.

Dans l'exemple représenté sur les figures, l'équipement 45 de restitution audio individuel comporte au moins un casque 66 associé à chaque siège 26 et visible sur la figure 1. Le casque 66 est un casque avec ou sans fil.

L'équipement 44 de vision extérieure comporte une pluralité de caméras 68 de vision extérieure à la cabine, et une unité de pilotage 70, propre à afficher sélectivement l'image engendrée par une caméra 68 sur un écran 62.

L'équipement 46 de communication extérieure comporte au moins une borne de téléphonie mobile, notamment une borne GSM, UMTS ou GPRS ou une borne de téléphone par satellite.

L'équipement 48 de communication intérieure comporte un dispositif d'annonce 72 permettant à l'équipage de l'aéronef de diffuser un message sonore et/ou vidéo et un système d'appel individuel 74, associé à chaque siège 26 pour permettre à l'occupant de la plate-forme 10 d'alerter un membre de l'équipage.

Le réseau central de communication 33 raccorde les équipements fonctionnels 30 entre eux. Il est par exemple formé par un réseau filaire local opérant sous la norme IEEE 802.3 (réseau « Ethernet »).

Le réseau central 33 comporte avantageusement au moins une borne de connexion sans fil 78 permettant à au moins une partie des équipements fonctionnels 30 d'être raccordés au réseau 33 par une connexion sans fil courte distance, opérant par exemple sous la norme IEEE 802.11 (Wifi), la norme IEEE 802.15.1 (Zigbee) ou encore la norme IEEE 802.15.4.

Ainsi, un premier groupe d'équipements fonctionnels 30 est raccordé au réseau central 33 par une connexion filaire, et un deuxième groupe d'équipements fonctionnels 30 est raccordé au réseau central 33 par une connexion sans fil.

L'unité 31 de pilotage est raccordée à chaque équipement fonctionnel 30 par l'intermédiaire du réseau central 33. Elle est propre à être opérée par un membre de l'équipage de la plate-forme 10 pour piloter chacun des équipements 30. Dans un exemple avantageux, l'unité 31 est formée par une tablette tactile, avantageusement disposée dans un compartiment de la plate-forme 10.

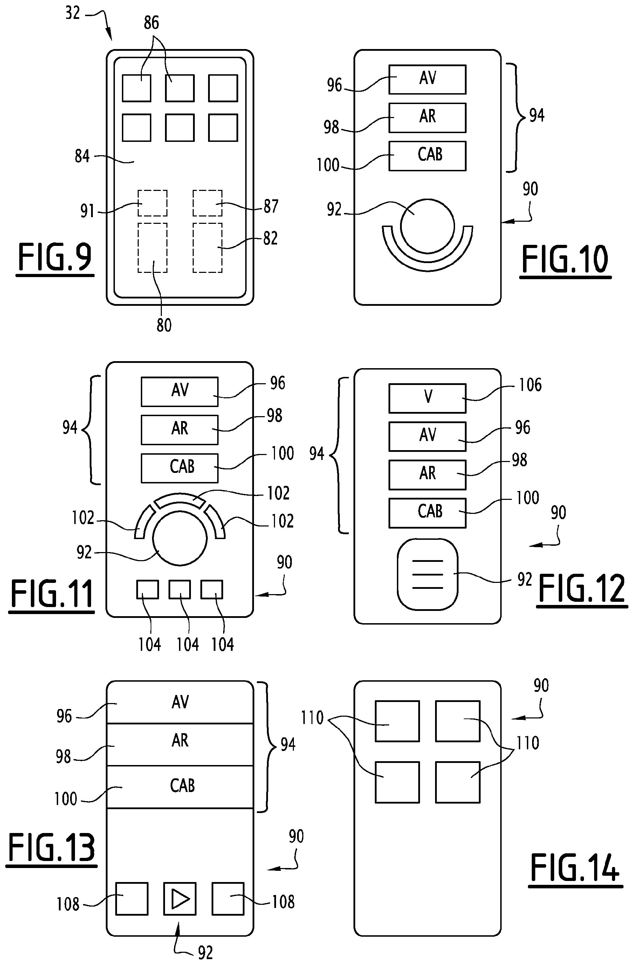

En référence à la figure 9, le dispositif électronique mobile 32 est avantageusement portable pour être saisi par un occupant de la plate-forme 10. Il est par exemple formé par un téléphone mobile, de préférence un ordiphone (ou « smartphone » en anglais).

En variante, le dispositif électronique mobile 32 est formé par une tablette, tel qu'une tablette à écran tactile.

Le dispositif électronique mobile 32 comporte une mémoire 80, propre à stocker une pluralité d'applications logicielles de commande des équipements 30 et une unité 82 de traitement et de gestion d'interface, propre à exécuter les applications logicielles. Il comporte en outre une interface utilisateur 84, formée avantageusement par un écran tactile.

L'unité de traitement et de gestion d'interface 82 est propre à afficher sur l'interface utilisateur 84 une fenêtre de base comportant des icônes 86 d'exécution des applications logicielles de commande, et, sur activation de chaque icône 86, une fenêtre de pilotage 90 de l'application logicielle de commande.

Le dispositif électronique mobile 32 comporte en outre un système 87 de connexion sans fil au réseau central 33, et avantageusement un système radioélectrique 91 de téléphonie.

Pour chaque application logicielle de commande, la mémoire 80 est propre à stocker des données de préférences utilisateur, associées à l'équipement fonctionnel 30 piloté par l'application logicielle de commande.

Chaque application logicielle de commande stockée dans la mémoire 80 est propre à piloter au moins un équipement 30, en fonction de la donnée d'identification de localisation choisie reçue de l'ensemble d'appariement 35, et des données de préférences utilisateur.

Ainsi, chaque application logicielle de commande est propre à permettre le pilotage sélectif de l'équipement 30 en fonction de la position de la borne locale 34 en interaction avec le dispositif électronique mobile 32 dans la cabine 12 de la plate-forme 10.

En particulier, chaque application logicielle de commande est propre à permettre le pilotage sélectif de l'équipement 30 en fonction du compartiment 14, 16 dans lequel se trouve la borne locale 31, 34 appariée avec le dispositif électronique mobile 32.

Ainsi, selon l'invention, après l'appariement du dispositif électronique mobile 32 avec une borne locale 34, l'application logicielle de commande est configurée pour exécuter automatiquement une commande de l'équipement 30, qui s'applique uniquement dans le compartiment 14, 16 dans lequel se trouve la borne locale 34, voire exclusivement au voisinage du siège 26 ou sur le siège 26 associé à la borne locale 34. Cette commande est exécutée sur la base des données de préférences utilisateur stockées dans la mémoire 80.

L'unité de pilotage 31 est par ailleurs propre à s'apparier avec un dispositif électronique mobile 32 d'un membre d'équipage, en particulier d'un pilote, pour transmettre une information de positionnement local du membre d'équipage au voisinage de l'unité 31, généralement disposée dans un office (ou « galley » en anglais).

Le dispositif électronique portable 32 du membre d'équipage est alors propre à exécuter des applications logicielles offrant des droits de commande différents de ceux des passagers de l'aéronef.

Par ailleurs, chaque application logicielle de commande stockée dans la mémoire 80 est avantageusement propre à piloter l'équipement 30 par saisie manuelle de l'utilisateur effectuée sur l'interface utilisateur 84 du dispositif électronique mobile 32.

Dans ce cas, chaque application logicielle de commande est avantageusement mise en oeuvre en sélectionnant une icône 86 associée à cette application sur l'interface utilisateur 84, pour faire apparaître une fenêtre de commande spécifique 90 associée au pilotage de l'équipement 36 à 48.

De préférence, la fenêtre de commande 90 comporte au moins un bouton d'exécution 92 de la commande, et au moins un bouton 94 de localisation manuelle de l'emplacement particulier dans lequel la commande doit être exécutée, propre à être activé par un utilisateur pour définir la localisation où la commande doit être exécutée.

À titre d'exemple, chaque fenêtre de commande 90 comporte un premier bouton 96 d'exécution de la commande exclusivement dans un compartiment avant 14 de la cabine 12, un deuxième bouton 98 d'exécution de la commande exclusivement dans un compartiment arrière 16 de la cabine 12, et de préférence, un bouton 100 d'exécution de la commande dans l'ensemble de la cabine 12.

Dans l'exemple représenté sur les figures, une application logicielle de commande est propre par exemple à commander automatiquement l'équipement de pilotage de la température 36, en fonction de la donnée d'identification de localisation transmise depuis la borne locale 34 au dispositif électronique mobile 32 et des données de préférence de température stockées dans la mémoire 80.

En variante, cette commande est mise en oeuvre sur la base d'une saisie manuelle de l'utilisateur effectuée sur l'interface graphique 84.

La fenêtre de commande 90 associée à cette application logicielle est illustrée par la figure 10.

Elle comporte au moins un bouton 92 permettant le réglage et la commande d'une température souhaitée, et des boutons 96 à 100, tels que décrits précédemment. Le bouton 92 est ici une molette graphique.

Une autre application logicielle de commande stockée dans la mémoire 80 est propre par exemple à commander automatiquement l'équipement de pilotage de l'éclairage 38, en fonction de la donnée d'identification de localisation transmise depuis la borne locale 34 au dispositif électronique mobile 32 et des données de préférence d'éclairage stockées dans la mémoire 80.

En variante, cette commande est mise en oeuvre sur la base d'une saisie manuelle de l'utilisateur effectuée sur l'interface utilisateur 84.

La fenêtre de commande 90 associée à cette application logicielle est illustrée par la figure 11.

Elle comporte au moins un bouton 92 d'activation de l'éclairage, et des boutons 102 de sélection du type d'éclairage piloté, par exemple l'éclairage plafond ou l'éclairage latéral.

La fenêtre de commande 90 peut comporter également des boutons 104 de sélection de la couleur de l'éclairage souhaité, ou encore une mire de réglage, en plus des boutons 96 à 100 de localisation décrits précédemment.

Une autre application logicielle de commande stockée dans la mémoire 80 est propre par exemple à commander automatiquement l'équipement de pilotage 40 de l'obturation des hublots, en fonction de la donnée d'identification de localisation transmise depuis la borne locale 34 au dispositif électronique mobile 32 et des données de préférence d'obturation stockées dans la mémoire 80.

En variante, cette commande est mise en oeuvre sur la base d'une saisie manuelle de l'utilisateur effectuée sur l'interface utilisateur 84.

La fenêtre de commande 90 associée à cette application logicielle est illustrée par la figure 12.

Elle comporte un bouton 92 de réglage du degré d'obturation du hublot 21, pilotable manuellement. En plus des boutons 96 à 100 précédemment décrits, au moins un bouton 106 est propre à piloter le réglage du ou des hublots 21 situés directement au voisinage du siège 26 associé à la borne locale 34 appariée avec le dispositif électronique mobile 32.

Une autre application logicielle de commande stockée dans la mémoire 80 est propre par exemple à commander automatiquement l'équipement de restitution audio et/ou vidéo 42, en fonction de la donnée d'identification de localisation transmise depuis la borne locale 34 au dispositif électronique mobile 32 et des données de préférence audio et/ou vidéo et/ou de jeux et/ou de magazines et/ou de livres stockées dans la mémoire 80.

Ces données comprennent par exemple des listes préférentielles de fichiers audio et/ou vidéo et/ou de jeux.

En variante, cette commande est mise en oeuvre manuellement sur la base d'une saisie de l'utilisateur effectuée sur l'interface graphique 84.

La fenêtre de commande 90 associée à cette application logicielle est illustrée par la figure 13.

Comme précédemment, la fenêtre 90 comporte les boutons 96 à 100 permettant la restitution audio et/ou vidéo et/ou de jeux et/ou de magazines et/ou de livres, respectivement dans le compartiment avant 14, dans le compartiment arrière 98, et dans l'ensemble de la cabine 12.

La fenêtre 90 comporte en outre un bouton d'exécution 92 permettant de jouer et/ou de mettre en pause une restitution audio et/ou vidéo et/ou de jeux et éventuellement d'autres boutons d'exécution 108 permettant par exemple une avance ou un retour rapide, où le passage à un autre fichier audio et/ou vidéo et/ou de jeux et/ou de magazines et/ou de livres.

Une autre application logicielle de commande stockée dans la mémoire 80 est propre par exemple à commander automatiquement l'équipement de vision extérieure 44, en fonction de la donnée d'identification de localisation transmise depuis la borne locale 34 au dispositif électronique mobile 32 et des données de préférence de vision extérieure stockées dans la mémoire 80.

Ces données comprennent par exemple le choix d'une caméra de vision extérieure préférentielle.

En variante, cette commande est mise en oeuvre manuellement sur la base d'une saisie de l'utilisateur effectuée sur l'interface graphique 84.

La fenêtre de commande 90 associée à cette application logicielle est illustrée par la figure 14.

Cette fenêtre est dépourvue de boutons 96 à 100. Elle est par contre munie d'icônes 110 permettant l'activation sélective et l'affichage sur un écran 62 d'une caméra de vision extérieure choisie parmi l'ensemble des caméras de vision extérieure.

Une autre application logicielle de commande stockée dans la mémoire 80 est propre par exemple à permettre l'identification auprès de l'équipement et à commander l'équipement de restitution audio et/ou vidéo individuel 45, en fonction de la donnée d'identification de localisation transmise depuis la borne locale 34 au dispositif électronique mobile 32 pour raccorder l'équipement de restitution audio et/ou video individuel 45 à la borne 34 et/ou au réseau central 33 par une liaison avec ou sans fil 118, par exemple opérant sous la norme IEEE 802.11 (Wifi), la norme IEEE 802.15.1 (Zigbee) ou encore la norme IEEE 802.15.4.

Une autre application logicielle de commande stockée dans la mémoire 80 est propre par exemple à commander automatiquement l'équipement de communication extérieure 46, en fonction de la donnée d'identification de localisation transmise depuis la borne locale 34 au dispositif électronique mobile 32 et des données de préférence de téléphonie stockées dans la mémoire 80.

Cette application est par exemple apte à raccorder automatiquement le dispositif électronique mobile 32, en particulier l'équipement radioélectrique de téléphonie 91 à la borne de téléphonie mobile.

Une autre application logicielle de commande stockée dans la mémoire 80 est propre à engendrer une alerte auprès de l'équipage sur l'unité 31 en fonction de la donnée d'identification de localisation choisie reçue de l'ensemble d'appariement 35.

L'application logicielle de commande peut en outre être mise en oeuvre manuellement par pression sur un bouton affiché sur l'interface utilisateur 84, ou par un code de pression, tels qu'une double pression sur l'interface utilisateur 84.

Dans le mode de réalisation illustré par les figures 1 et 2, chaque borne locale 34 est raccordée au réseau central 33, par exemple par une liaison filaire, ou par liaison sans fil.

Dans un exemple, chaque borne locale 34 est formée par une interface tactile fixée sur un siège 26 ou au voisinage de celui-ci, par exemple sur une table 28 ou sur un support latéral 29. En variante, au moins une borne locale 34 est formée par une tablette tactile, fixée de manière amovible sur le siège 26, ou au voisinage de celui-ci.

De préférence, chaque borne locale 34 est associée à un siège 26 particulier, prédéfini dans la cabine 12.

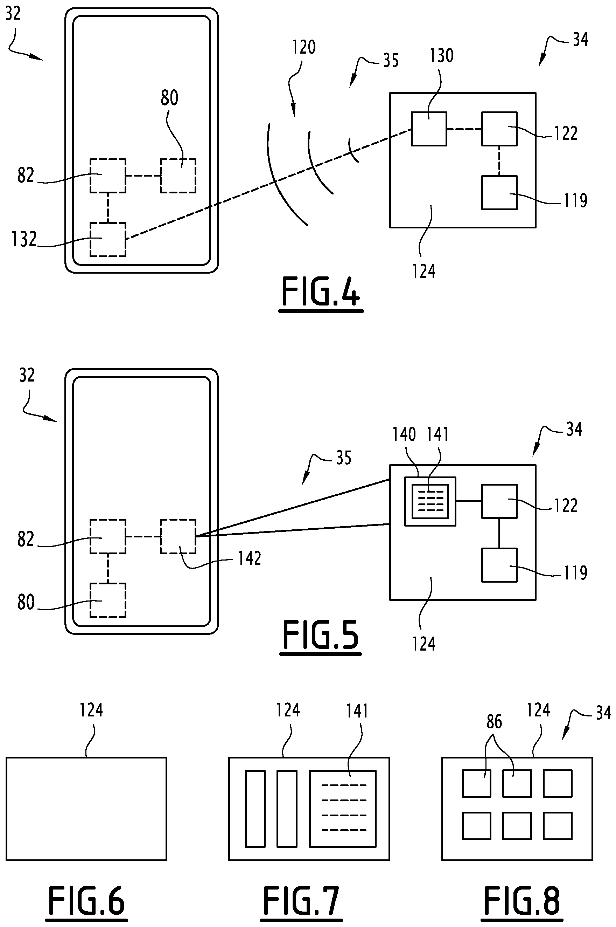

Comme illustré par la figure 4, chaque borne 34 comporte une mémoire 119, propre à stocker au moins une donnée d'identification de la localisation associée à la borne 34, une unité de traitement local 122 associée à la mémoire 119 et éventuellement, une interface utilisateur 124.

Les données d'identification de localisation comportent par exemple le numéro du siège 26, une information de positionnement du siège dans la cabine 12, en particulier, représentative du compartiment 14, 16 dans lequel se trouve le siège 26.

Elles peuvent comporter des informations d'identification de la plate-forme 10, par exemple le type de plate-forme 10 ou le numéro de série de la plate-forme 10.

Avantageusement, la mémoire 119 stocke aussi des informations relatives à une connexion sans fil du dispositif électronique mobile 32 sur le réseau central 33, tel qu'un identifiant de réseau et/ou une clé de réseau.

L'interface utilisateur 124 comporte de préférence un écran tactile 126. Comme illustré par la figure 8, l'écran tactile 126 peut être activé par l'utilisateur pour faire apparaître une fenêtre comprenant des icônes 86 d'exécution des applications de commande des équipements 30, analogues aux icônes 86 s'affichant sur le dispositif électronique mobile 32.

Dans le mode de réalisation de la figure 4, l'ensemble d'appariement 35 est propre à mettre en oeuvre une liaison radioélectrique sans fil 120 de type « communication en champ proche », désignée par le terme anglais « Near Field Communication » ou « NFC ».

Une telle liaison est par exemple réalisée selon les normes ECMA-340 et ISO/IEC 18092.

Cette liaison est mise en oeuvre depuis la borne locale 34 vers le dispositif électronique mobile 32.

Elle est avantageusement mise en oeuvre de manière automatique par simple rapprochement entre le dispositif électronique mobile 32 et la borne 34. Elle présente généralement une portée maximale inférieure à 20 cm, et une portée d'utilisation standard notamment comprise entre 1 cm et 10 cm.

Le débit de transmission est relativement limité, par exemple inférieur à 500 kbps.

L'ensemble d'appariement 35 comporte ainsi un composant d'émission 130, parfois appelé « initiateur », porté par la borne 34, et un composant de réception 132, parfois appelé « cible » porté par le dispositif électronique mobile 32.

Avantageusement, le composant d'émission 130 est propre à engendrer un champ électromagnétique variable par induction, lequel est capté par une bobine du composant de réception 132. La fréquence du champ électromagnétique est par exemple comprise entre 5 MHz et 30 MHz.

Le champ électromagnétique variable forme un signal radioélectrique portant les données d'identification de localisation.

Dans un mode de réalisation, le composant d'émission 130 est formé par une puce stockant les données d'identification de localisation.

Le composant de réception 132 est propre à recevoir le signal portant les données d'identification de localisation transmises par le composant d'émission 130 à travers la liaison 120. Ce signal est ensuite lu par l'unité de traitement 82 du dispositif électronique mobile 32 pour en extraire les données d'identification de localisation.

Dans une variante ou dans un complément visible sur la figure 5, l'ensemble d'appariement 26 comporte un dispositif 140 d'affichage d'une étiquette d'encodage, ici un code-barres bidimensionnel, codant les données d'identification de localisation. Le dispositif 140 est porté par la borne 34. L'ensemble d'appariement 26 comprend un composant optique 142 propre à capter une image du code-barres bidimensionnel, le composant optique 142 étant porté par le dispositif électronique mobile 32.

Le dispositif d'affichage 140 est propre à afficher le code-barres bidimensionnel, par exemple lors d'une activation de l'interface 124 par l'utilisateur, comme illustré par la figure 7, et à masquer ce code-barres en l'absence d'activation, ou après une période de temps donné.

En variante, le dispositif d'affichage 140 affiche le code-barres bidimensionnel 141 en permanence.

Le composant optique 142 comporte une optique propre à détecter la structure du code-barres bidimensionnel 141.

Selon l'invention, l'unité de traitement 82 du dispositif électronique mobile 32 comporte un module logiciel de décodage, propre à restituer les données d'identification de localisation sur la base de la structure du code-barres bidimensionnel 141.

L'unité de traitement 82 est apte à utiliser ces données d'identification de localisation pour paramétrer automatiquement les applications logicielles de commande des équipements 30.

Le fonctionnement du système de gestion 24 selon l'invention va maintenant être décrit.

Initialement, l'utilisateur paramètre la mémoire 80 du dispositif électronique mobile 32 pour définir et stocker les données de préférence utilisateur.

Ces données préférentielles sont par exemple une température souhaitée, une configuration d'éclairage souhaitée, une configuration d'obturation des hublots 21 souhaitée, une configuration de siège souhaitée, une configuration de restitution audio et/ou vidéo et/ou de jeux et/ou de magazines et/ou de livres souhaités, telle qu'une liste préférentielle de fichiers, ou encore une configuration souhaitée du système de vision extérieure.

En outre, l'utilisateur charge dans la mémoire 80 les applications logicielles de commande des équipements 30.

Puis, lorsque l'utilisateur est dans la cabine 12, il se dirige ou vers une localisation choisie dans la cabine 12, par exemple un siège 26.

Il place alors son dispositif électronique mobile 32 au voisinage de la borne locale 34 associée à la localisation choisie.

Dans le cas d'un ensemble d'appariement 35 par liaison sans fil, l'utilisateur place le composant de réception 132 en regard du composant d'émission 130. Le composant d'émission 130 engendre automatiquement un champ électromagnétique variable portant les données d'identification de localisation, transmis au composant de réception 132. Cette transmission s'effectue avantageusement par une liaison 120 de communication en champ proche, telle que décrite plus haut. Le composant de réception 132 engendre un signal électrique portant les données d'identification de localisation.

En variante ou en complément, l'utilisateur fait apparaître un code-barres bidimensionnel 141 sur le dispositif d'affichage 140 et scanne le code-barres bidimensionnel 141 à l'aide du composant optique 142 pour engendrer un signal électrique portant les données d'identification de localisation.

L'unité de traitement 82 recueille le signal électrique, et le traite pour en extraire les données d'identification de la localisation.

L'unité 82 configure alors automatiquement les applications logicielles de commande des équipements 30 sur la base des données d'identification de localisation et avantageusement, des données de préférence utilisateur.

En particulier, l'unité de traitement 82 configure la liaison de données sans fil entre le dispositif électronique mobile 32 et le réseau central 33 pour activer cette liaison. Elle configure également les liaisons de données sans fil éventuelles entre le dispositif électronique mobile 32 et les équipements 30, en particulier entre le dispositif électronique mobile 32 et l'équipement motorisé 41 de pilotage de la configuration du siège, et entre le dispositif électronique mobile 32 et l'équipement de restitution audio individuel 45.

Lorsque ces liaisons sont établies, l'unité de traitement 82 peut exécuter automatiquement les applications logicielles de commande pour piloter automatiquement au moins une partie des équipements 30 sur la base des données d'identification de localisation transmise par l'ensemble d'appariement 35, et sur la base des données de préférences utilisateur stockées dans la mémoire 80.

La commande automatique de l'équipement 36 de gestion de la température s'effectue alors pour appliquer localement la température souhaitée dans le compartiment 14, 16 dans lequel la borne locale 34 a interagi avec le dispositif électronique mobile 32.

De même, la commande automatique de l'équipement de pilotage 38 de l'éclairage s'effectue pour appliquer localement la luminosité souhaitée dans le compartiment 14, 16 dans lequel la borne locale 34 a interagi avec le dispositif électronique mobile 32.

La commande automatique de l'équipement d'obturation des hublots 40 peut également s'effectuer, conformément aux préférences souhaitées d'obturation des hublots prédéfinies par l'utilisateur, dans le compartiment 14, 16 dans lequel la borne locale 34 a interagi avec le dispositif électronique mobile 32.

Par ailleurs, la commande automatique de l'équipement motorisé 41 de configuration du siège 26 s'effectue également pour adopter la configuration d'inclinaison de siège choisie par l'utilisateur.

Si l'utilisateur le souhaite, une commande d'autres équipements 30 peut également s'effectuer automatiquement une fois l'appariement réalisé.

Le système 24 de gestion d'environnement cabine selon l'invention est donc particulièrement simple à mettre en oeuvre, puisqu'il nécessite un simple rapprochement spatial entre un dispositif électronique mobile 32 et une borne locale 31, 34 pour réaliser un appariement permettant la transmission de données d'information de localisation de la borne 31, 34 vers le dispositif électronique mobile 32.

L'unité de traitement 82 du dispositif électronique mobile 32 est alors apte à configurer automatiquement chaque application logicielle de commande d'un équipement 30, de préférence sans intervention de l'utilisateur, et appliquer par défaut les préférences utilisateur à la configuration des équipements 30.

L'utilisateur dispose alors de toutes les fonctionnalités nécessaires pour gérer son environnement à l'aide de son dispositif électronique mobile 32.

Le système 24 s'adapte facilement à une pluralité d'équipements 30 différents. Il est en outre simple de rajouter un équipement 30 supplémentaire dans le système 24, et de le piloter par une nouvelle application logicielle de commande, ajoutée dans la mémoire 80 du dispositif électronique mobile 32.

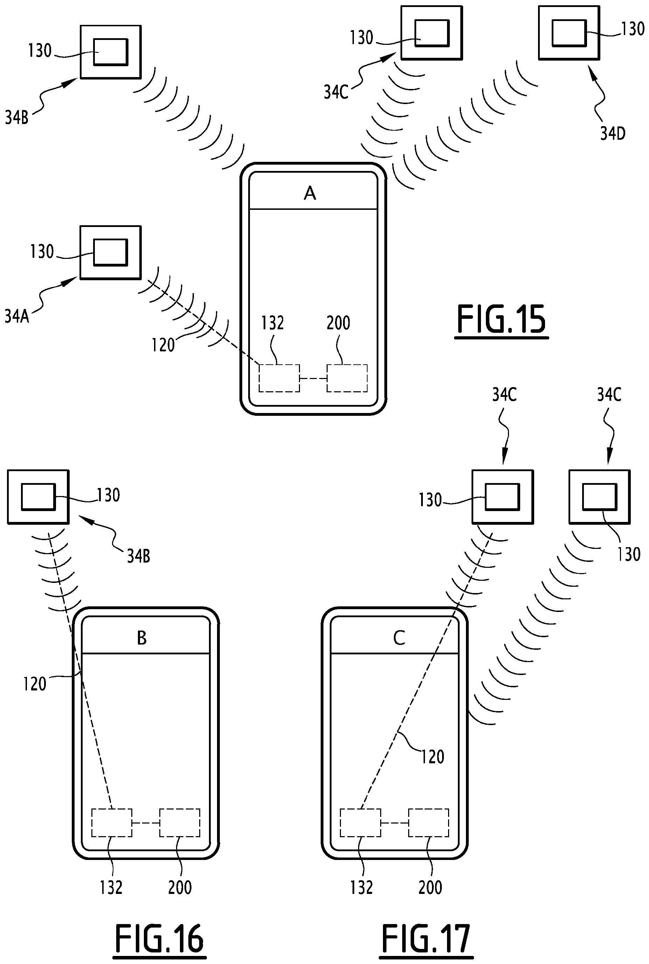

Le mode de réalisation des figures 15 à 17 diffère de celui représenté sur la figure 4 en ce que l'ensemble d'appariement 35 comporte en outre un composant 200 de positionnement, propre à déterminer la position relative de chaque composant d'émission 130 porté par chaque borne 34, pour trouver le composant d'émission 130 le plus proche du dispositif électronique mobile 32.

Le composant de positionnement 200 est porté par le dispositif électronique mobile 32.

Dans un mode de réalisation, le composant de positionnement 200 est propre à analyser les différents signaux radioélectriques reçus par le composant de réception 132, notamment leur intensité et/ou leur direction de provenance, pour déterminer au moins une donnée de position relative du composant d'émission 130 par rapport au composant de réception 132. Cette donnée permet d'identifier le composant d'émission 130 qui est le plus proche du dispositif électronique mobile 32 dans chaque position donnée du dispositif électronique mobile 32.

De préférence, chaque composant d'émission 130 comporte un traducteur propre à émettre activement, en permanence ou par intermittence, un signal radioélectrique portant les données d'identification de localisation.

Le signal radioélectrique est par exemple émis suivant le protocole Bluetooth basse énergie (ou Bluetooth Low Energy) à une fréquence comprise notamment entre 2 GHz et 3 GHz, en particulier à 2,4 GHz.

Chaque composant d'émission 130 est par exemple un composant de type iBeacon®, de la société APPLE.

L'ensemble d'appariement 35 est propre à établir une liaison radioélectrique sans fil 120 entre le composant de réception 132 et le composant d'émission 130 de chaque borne 34 détectée. Le signal portant les données d'identification de localisation est transmis depuis chaque composant d'émission 130 vers le composant de réception 132.

Comme décrit précédemment, le signal est ensuite lu par l'unité de traitement 82 du dispositif électronique mobile 32 pour en extraire les données d'identification de localisation.

Lorsque l'utilisateur se déplace avec le dispositif électronique mobile 32, l'ensemble d'appariement 35 est propre, à chaque instant, à déterminer le composant d'émission 130 le plus proche du dispositif électronique mobile 32 à l'aide du composant de positionnement 200 et à configurer l'application logicielle de commande sur la base de la donnée de localisation associée à cette borne 34, reçue par la liaison radioélectrique sans fil 120.

Le fonctionnement du système de gestion 24 est illustré par les figures 15 à 17.

Dans cet exemple, le système 24 comporte des bornes 34A à 34D, situées dans la cabine, par exemple au voisinage de chaque siège 26.

Lorsque l'utilisateur portant le dispositif électronique mobile 32 avance vers l'aéronef, le composant de réception 132 détecte le signal radioélectrique émis par le composant d'émission 130 d'une borne 34A, et éventuellement d'autres signaux radioélectriques émis par les composants d'émission 130 des autres bornes 34B à 34C.

L'ensemble d'appariement 35 engendre alors une liaison sans fil 120 entre le composant d'émission 130 de chaque borne 34A à 34D détectée et le composant de réception 132.

Comme illustré par la figure 15, le composant de positionnement 200 détecte que le composant d'émission 130 de la borne 34A est le plus proche.

Lorsque le composant de positionnement 200 détermine que le dispositif électronique mobile 32 est situé à une distance inférieure à une première distance seuil, par exemple 50 mètres, de la borne 34A la plus proche, l'unité de traitement et de gestion d'interface 82 affiche alors avantageusement sur l'interface utilisateur 84 une fenêtre comportant par exemple un message indiquant la proximité avec l'aéronef.

Puis, lorsque l'utilisateur muni du dispositif électronique mobile 32 entre dans l'aéronef, il se rapproche, avec son dispositif électronique mobile 32, au-delà d'une deuxième distance seuil, inférieure à la première distance seuil, égale par exemple à 2 mètres, de la borne la plus proche 34A.

L'unité de traitement et de gestion d'interface 82 affiche alors avantageusement sur l'interface utilisateur 84 une fenêtre comportant par exemple un message de bienvenue dans l'aéronef.

Ensuite, comme illustré par la figure 16, lorsque l'utilisateur se place près d'une borne 34B située dans la cabine, par exemple au niveau d'un siège 26, le composant de positionnement 200 détecte que le composant d'émission 130 de la borne 34B associée est désormais le plus proche. Il détecte en outre que le dispositif électronique mobile 32 est situé à une distance inférieure à une troisième distance seuil, inférieure à la deuxième distance seuil, de la borne 34B, par exemple inférieure à 50 cm.

L'unité de traitement 82 extrait la donnée d'identification de localisation reçue par la liaison sans fil 120 associée à la borne 34B et configure automatiquement au moins une application logicielle de commande, sur la base de la donnée d'identification de localisation transmise par la borne 34B.

L'utilisateur est alors apte à mettre en oeuvre une application logicielle de commande pour piloter un équipement fonctionnel 30.

Lorsque l'utilisateur se déplace dans l'aéronef avec son dispositif électronique mobile 32 et se rapproche d'une autre borne 34C, par exemple associée à un autre siège 26 de l'aéronef, le composant de détection 200 détecte que cette borne 34C est la plus proche et que la distance séparant le dispositif 32 de la borne 34C est inférieure à la troisième distance seuil. Dans ce cas, le dispositif électronique mobile 32 reconfigure l'application logicielle de commande sur la base de la donnée d'identification de localisation associée à la borne 34C.

Dans cette variante, l'utilisateur n'a pas besoin de placer spécifiquement le composant de réception 132 en regard du composant d'émission 130 lorsqu'il se déplace dans l'aéronef, le composant de positionnement 200 étant apte à identifier automatiquement la borne 34 la plus proche, pour que l'ensemble d'appariement 35 configure l'application logicielle de commande en fonction de la donnée d'identification de localisation associée à cette borne 34.

Le système 24 tels que décrit sur les figures 15 à 17 est donc particulièrement simple d'utilisation.

## Revendications

1. Système (24) de gestion d'un environnement cabine dans une plate-forme (10), le système (24) comprenant :
- un dispositif électronique mobile (32) comportant une mémoire (80) et une interface utilisateur (84) ;
- au moins une borne locale (31, 34), disposée au voisinage d'une localisation prédéfinie dans la cabine (12) ;
- un ensemble (35) d'appariement du dispositif électrique mobile (32) avec la borne locale (31, 34) ;
- au moins un équipement fonctionnel (30) de gestion de l'environnement de la cabine ;
**caractérisé en ce que** la mémoire (80) du dispositif électronique mobile (32) stocke au moins une application logicielle de commande de l'équipement fonctionnel (30),
l'ensemble d'appariement (35) étant propre à transmettre au dispositif électronique mobile (32) au moins une donnée d'identification de localisation de la borne locale (31, 34) lors de l'appariement entre le dispositif électronique mobile (32) et la borne locale (31, 34), le dispositif électronique mobile (32) étant propre à configurer l'application logicielle de commande, sur la base de la donnée d'identification de localisation.

2. Système (24) selon la revendication 1, **caractérisé en ce que** l'ensemble d'appariement (35) comporte :
- un composant d'émission (130) porté par la borne locale (31, 34), propre à émettre un signal radioélectrique portant la donnée d'identification de localisation,
- un composant de réception (132) de la donnée d'identification de localisation porté par le dispositif électronique mobile (32),
l'ensemble d'appariement (35) étant propre à établir automatiquement une liaison radioélectrique locale sans fil entre le composant d'émission (130) et le composant de réception (132) par rapprochement du composant d'émission (130) et du composant de réception (132) pour transmettre le signal radioélectrique portant la donnée d'identification de localisation.

3. Système (24) selon la revendication 2, **caractérisé en ce que** l'ensemble d'appariement (35) comporte un composant de positionnement (200) propre à engendrer une donnée de position relative du composant de réception (132) par rapport au composant d'émission (130).

4. Système (24) selon l'une des revendications 2 ou 3, **caractérisé en ce que** la liaison radioélectrique locale sans fil est une liaison de communication en champ proche ou est une liaison de communication Bluetooth basse énergie.

5. Système (24) selon l'une quelconque des revendications précédentes, **caractérisé en ce que** l'ensemble d'appariement (35) comporte un dispositif (140) d'affichage d'une étiquette d'encodage de la donnée d'identification de localisation, porté par la borne locale (31, 34), et un composant optique (142) de lecture de l'étiquette d'encodage, porté par le dispositif électronique mobile (32), l'étiquette d'encodage étant avantageusement un code-barres bidimensionnel (141).

6. Système (24) selon l'une quelconque des revendications précédentes, **caractérisé en ce qu'**il comporte une pluralité de bornes locales (31, 34), chaque borne locale (34) étant associée à une localisation choisie dans la cabine.

7. Système (24) selon la revendication 6, **caractérisé en ce que** la cabine (12) comporte une pluralité de sièges (26), le système (24) comportant, pour chaque siège (26), une borne locale (34) associée au siège (26), disposée sur le siège (26) ou au voisinage du siège (26).

8. Système (24) selon l'une quelconque des revendications précédentes, **caractérisé en ce qu'**il comporte une liaison de transmission de données propre à relier le dispositif électronique mobile (32) à chaque équipement fonctionnel (30) pour piloter l'équipement fonctionnel (30) à partir du dispositif électronique mobile (32) à l'aide de l'application logicielle de commande.

9. Système (24) selon la revendication 8, **caractérisée en ce que** l'ensemble d'appariement (35) est propre à transmettre au dispositif électronique mobile (32) des données de configuration de la liaison de transmission de données, depuis la borne locale (31, 34), le dispositif électronique mobile (32) étant avantageusement propre à établir automatiquement la liaison de transmission de données lors de l'appariement entre le dispositif électronique mobile (32) et la borne locale (31, 34), sur la base des données de configuration de la liaison de transmission de données.

10. Système (24) selon la revendication 8 ou 9, **caractérisé en ce que** la liaison de transmission de données comporte un réseau central de communication (33), et une connexion sans fil entre le dispositif électrique mobile (32) et le réseau central de communication (33).

11. Système (24) selon l'une quelconque des revendications précédentes, **caractérisé en ce que** la mémoire (80) du dispositif électronique mobile (32) stocke des données de préférences utilisateur, l'application logicielle de commande étant propre à piloter l'équipement fonctionnel (30) sur la base d'au moins une donnée de préférences utilisateur stockée dans la mémoire (80).

12. Système (24) selon l'une quelconque des revendications précédentes, **caractérisé en ce qu'**au moins une application logicielle de commande est propre à piloter l'équipement fonctionnel (30) sans intervention de l'utilisateur, lors d'un appariement entre le dispositif électrique mobile (32) et la borne locale (31, 34).

13. Système (24) selon l'une quelconque des revendications précédentes, **caractérisé en ce qu'**au moins une application logicielle de commande est propre à piloter l'équipement fonctionnel (30), sur la base d'une instruction de commande transmise par l'utilisateur en utilisant l'interface utilisateur (84) du dispositif électronique mobile (32).

14. Système (24) selon l'une quelconque des revendications précédentes, **caractérisée en ce que** la cabine (12) comporte au moins un premier compartiment (14) et au moins un deuxième compartiment (16), le système (24) comprenant au moins une première borne locale (34) disposée dans le premier compartiment (14) et au moins une deuxième borne locale (34) disposée dans le deuxième compartiment (16), l'application logicielle de commande étant propre à piloter automatiquement l'équipement fonctionnel (30) dans le premier compartiment (14) lorsque le dispositif électronique mobile (32) et la première borne locale (34) ont été appariés, sans piloter automatiquement l'équipement fonctionnel (30) dans le deuxième compartiment (16), l'application logicielle de commande étant propre à piloter automatiquement l'équipement fonctionnel (30) dans le deuxième compartiment (16) lorsque le dispositif électronique mobile (32) et la deuxième borne locale (34) ont été appariés, sans piloter automatiquement l'équipement fonctionnel (30) dans le premier compartiment (14).

15. Procédé de gestion d'un environnement cabine dans une plateforme (10), le procédé comportant les étapes suivantes :
- fourniture d'un système (24) selon l'une quelconque des revendications précédentes ;
- appariement du dispositif électronique mobile (32) avec la borne locale (31, 34) par l'intermédiaire de l'ensemble d'appariement (35) ;
- transmission d'au moins une donnée d'identification de localisation associée à la borne locale (31, 34) ;
- configuration d'au moins une application logicielle de commande, sur la base de la donnée d'identification de localisation transmise ;
- mise en oeuvre de l'application logicielle de commande pour piloter un équipement fonctionnel (30).

## Patentansprüche

1. Verwaltungssystem (24) eines Kabinenumfeldes in einer Plattform (10), wobei das System (24) umfasst:
- eine bewegliche elektronische Vorrichtung (32), die einen Speicher (80) und eine Benutzerschnittstelle (84) aufweist;
- mindestens einen lokalen Anschluss (31, 34), der in der Nähe einer vorbestimmten Stelle in der Kabine (12) angeordnet ist;
- eine Anordnung (35) zum Anpassen der beweglichen elektronischen Vorrichtung (32) an den lokalen Anschluss (31, 34);
- mindestens eine Funktionsausrüstung (30) zum Verwalten des Umfeldes der Kabine;
**dadurch gekennzeichnet, dass** der Speicher (80) der beweglichen elektronischen Vorrichtung (32) mindestens eine Softwareanwendung zur Steuerung der Ausrüstung (30) speichert,
wobei die Anpassungsanordnung (35) geeignet ist, der beweglichen elektronischen Vorrichtung (32) mindestens ein Identifikationsdatenwort der Lokalisierung des lokalen Anschlusses (31, 34) bei der Anpassung zwischen der beweglichen elektronischen Vorrichtung (32) und dem lokalen Anschluss (31, 34) zu senden, wobei die bewegliche elektronische Vorrichtung (32) geeignet ist, die Steuerungssoftwareanwendung auf der Basis des Identifikationsdatenwortes der Lokalisierung zu konfigurieren.

2. System (24) nach Anspruch 1, **dadurch gekennzeichnet, dass** die Anpassungsanordnung (35) umfasst:
- eine Sendekomponente (130), die von dem lokalen Anschluss (31, 34) getragen wird und geeignet ist, eine Funksignal zu senden, das das Identifikationsdatenwort der Lokalisierung beinhaltet,
- eine Empfangskomponente (132) des Identifikationsdatenwortes der Lokalisierung, das von der beweglichen elektronischen Vorrichtung (32) getragen wird,
wobei die Anpassungsanordnung (35) geeignet ist, automatisch eine lokale drahtlose Funkverbindung zwischen der Sendekomponente (130) und der Empfangskomponente (132) durch Annähern der Sendekomponente (130) und der Empfangskomponente (132) herzustellen, um das das Identifikationsdatenwort der Lokalisierung enthaltende Funksignal zu übertragen.

3. System (24) nach Anspruch 2, **dadurch gekennzeichnet, dass** die Anpassungsanordnung (35) eine Positionierungskomponente (200) aufweist, die geeignet ist, ein Datenwort der Positionierung betreffend der Empfangskomponente (132) in Bezug auf die Sendekomponente (130) zu erzeugen.

4. System (24) nach einem der Ansprüche 2 oder 3, **dadurch gekennzeichnet, dass** die lokale drahtlose Funkverbindung eine Verbindung der Nahfeldkommunikation oder eine Bluetooth-Kommunikationsverbindung niedriger Energie ist.

5. System (24) nach einem beliebigen der vorhergehenden Ansprüche, **dadurch gekennzeichnet, dass** die Anpassungsanordnung (35) eine Anzeigevorrichtung (140) eines Kodierungskennzeichens des Identifikationsdatenwortes der Lokalisierung, die von dem lokalen Anschluss (31, 34) getragen wird, und eine optische Komponente (142) zum Lesen des Kodierungskennzeichens, die von der beweglichen elektronischen Vorrichtung (32) getragen wird, aufweist, wobei das Kodierungskennzeichen vorteilhafterweise ein zweidimensionaler Barcode (141) ist.

6. System (24) nach einem beliebigen der vorhergehenden Ansprüche, **dadurch gekennzeichnet, dass** es eine Mehrzahl von lokalen Anschlüssen (31, 34) aufweist, wobei jeder lokale Anschluss (34) einer gewählten Stelle in der Kabine zugeordnet ist.

7. System (24) nach Anspruch 6, **dadurch gekennzeichnet, dass** die Kabine (12) eine Mehrzahl von Sitzen (26) aufweist, wobei das System (24) für jeden Sitz (26) einen dem Sitz (26) zugeordneten lokalen Anschluss (34) aufweist, der an dem Sitz (26) oder in der Nähe des Sitzes (26) angeordnet ist.

8. System (24) nach einem beliebigen der vorhergehenden Ansprüche, **dadurch gekennzeichnet, dass** es eine Datenübertragungsverbindung aufweist, die geeignet ist, die bewegliche elektronische Vorrichtung (32) mit jeder Funktionsausrüstung (30) zu verbinden, um die Funktionsausrüstung (30) von der beweglichen elektronischen Vorrichtung (32) aus mithilfe der Steuerungssoftwareanwendung zu steuern.

9. System (24) nach Anspruch 8, **dadurch gekennzeichnet, dass** die Anpassungsanordnung (35) geeignet ist, an die bewegliche elektronische Vorrichtung (32) Konfigurationsdaten der Datenübertragungsverbindung von dem lokalen Anschluss (31, 34) zu übertragen, wobei die bewegliche elektronische Vorrichtung (32) vorteilhafterweise geeignet ist, automatisch die Datenübertragungsverbindung bei der Anpassung zwischen der beweglichen elektronischen Vorrichtung (32) und dem lokalen Anschluss (31, 34) auf der Grundlage der Konfigurationsdaten der Datenübertragungsverbindung herzustellen.

10. System (24) nach Anspruch 8 oder 9, **dadurch gekennzeichnet, dass** die Datenübertragungsverbindung ein zentrales Kommunikationsnetz (33) und eine drahtlose Verbindung zwischen der beweglichen elektronischen Vorrichtung (32) und dem zentralen Kommunikationsnetz (33) aufweist.

11. System (24) nach einem beliebigen der vorhergehenden Ansprüche, **dadurch gekennzeichnet, dass** der Speicher (80) der beweglichen elektronischen Vorrichtung (32) Nutzereinstellungsdaten speichert, wobei die Steuerungssoftwareanwendung geeignet ist, die Funktionsausrüstung (30) auf der Grundlage von mindestens einem in dem Speicher (80) gespeicherten Nutzereinstellungsdatenwort zu steuern.

12. System (24) nach einem beliebigen der vorhergehenden Ansprüche, **dadurch gekennzeichnet, dass** mindestens eine Steuerungssoftwareanwendung geeignet ist, die Funktionsausrüstung (30) ohne Eingriff des Nutzers bei einer Anpassung zwischen der beweglichen elektronischen Vorrichtung (32) und dem lokalen Anschluss (31, 34) zu steuern.

13. System (24) nach einem beliebigen der vorhergehenden Ansprüche, **dadurch gekennzeichnet, dass** mindestens eine Steuerungssoftwareanwendung geeignet ist, die Funktionsausrüstung (30) auf der Grundlage einer Befehlsinstruktion zu steuern, die von dem Nutzer unter Verwendung der Benutzerschnittstelle (84) der beweglichen elektronischen Vorrichtung (32) übertragen wird.

14. System (24) nach einem beliebigen der vorhergehenden Ansprüche, **dadurch gekennzeichnet, dass** die Kabine (12) mindestens ein erstes Abteil (14) und mindestens ein zweites Abteil (16) aufweist, wobei das System (24) mindestens einen ersten lokalen Anschluss (34), der in dem ersten Abteil (14) angeordnet ist, und mindestens einen zweiten lokalen Anschluss (34), der in dem zweiten Abteil (16) angeordnet ist, aufweist, wobei die Steuerungssoftwareanwendung geeignet ist, automatisch die Funktionsausrüstung (30) in dem ersten Abteil (14) zu steuern, wenn die bewegliche elektronische Vorrichtung (33) und der erste lokale Anschluss (34) aneinander angepasst wurden, ohne automatisch die Funktionsausrüstung (30) in dem zweiten Abteil (16) zu steuern, wobei die Steuerungssoftwareanwendung geeignet ist, automatisch die Funktionsausrüstung (30) in dem zweiten Abteil (16) zu steuern, wenn die bewegliche elektronische Vorrichtung (33) und der zweite lokale Anschluss (34) aneinander angepasst wurden, ohne automatisch die Funktionsausrüstung (30) in dem ersten Abteil (14) zu steuern.

15. Verfahren zum Verwalten eines Kabinenumfeldes in einer Plattform (10), wobei das Verfahren die folgenden Schritte aufweist:
- Bereitstellen eines Systems (24) nach einem beliebigen der vorhergehenden Ansprüche;
- Anpassen der beweglichen elektronischen Vorrichtung (32) an den lokalen Anschluss (31, 34) mittels der Anpassungsanordnung (35);
- Übertragen mindestens eines Identifikationsdatenwortes der Lokalisierung, das dem lokalen Anschluss (31, 34) zugeordnet ist;
- Konfigurieren mindestens einer Steuerungssoftwareanwendung auf der Grundlage des übertragenen Identifikationsdatenwortes der Lokalisierung;
- Durchführen der Steuerungssoftwareanwendung zum Steuern einer Funktionsausrüstung (30).

## Claims

1. A system (24) for managing a cabin environment in a platform (10), the system (24) comprising:
- a mobile electronic device (32) including a memory (80) and a user interface (84);
- at least one local terminal (31, 34), arranged near a predefined location in the cabin (12);
- an assembly (35) for pairing the mobile electronic device (32) with the local terminal (31, 34);
- at least one piece of functional equipment (30) for managing the cabin environment;
**characterized in that** the memory (80) of the mobile electronic device (32) stores at least one software application for controlling the functional equipment (30),
the pairing system (35) being capable of sending the mobile electronic device (32) at least one location identification data of the local terminal (31, 34) during pairing between the mobile electronic device (32) and the local terminal (31, 34), the mobile electronic device (32) being able to configure the control software application, based on the location identification data.

2. The system (24) according to claim 1, **characterized in that** the pairing assembly (35) includes:
- a transmission component (130) borne by the local terminal (31, 34), capable of transmitting a wireless signal bearing the location identification data,
- a receiving component (132) for receiving the location identification data borne by the mobile electronic device (32),
the pairing assembly (35) being capable of automatically establishing a local wireless link between the transmission component (130) and the receiving component (132) by bringing the transmission component (130) and the receiving component (132) closer together to transmit the wireless signal bearing the location identification data.

3. The system (24) according to claim 2, **characterized in that** the pairing assembly (35) comprises a positioning component (200) able to generate a data of relative positioning of the receiving component (132) relative to the transmission component (130).

4. The system (24) according to any of claims 2 or 3, **characterized in that** the local wireless link is a near-field communication link or a Low energy Bluetooth communication link.

5. The system (24) according to any one of the preceding claims, **characterized in that** the pairing assembly (35) includes a device (140) for displaying an encoding label for the location identification data, borne by the local terminal (31, 34), and an optical component (142) for reading the encoding label, borne by the mobile electronic device (32), the encoding label advantageously being a two-dimensional barcode.

6. The system (24) according to any one of the preceding claims, **characterized in that** it includes multiple local terminals (31, 34), each local terminal (34) being associated with a selected location in the cabin.

7. The system (24) according to claim 6, **characterized in that** the cabin (12) includes multiple seats (26), the system (24) including, for each seat (26), a local terminal (34) associated with the seat (26), positioned on the seat (26) or near the seat (26).

8. The system (24) according to any one of the preceding claims, **characterized in that** it includes a data transmission link capable of connecting the mobile electronic device (32) to each piece of functional equipment (30) to control the functional equipment (30) from the mobile electronic device (32) using the control software application.

9. The system (24) according to claim 8, **characterized in that** the pairing assembly (35) is capable of sending the mobile electronic device (32) configuration data for the data transmission link, from the local terminal (31, 34), the mobile electronic device (32) advantageously being able to establish the data transmission link automatically during pairing between the mobile electronic device (32) and the local terminal (31, 34), based on the configuration data of the data transmission link.

10. The system (24) according to claim 8 or 9, **characterized in that** the data transmission link includes a central communication network (33), and a wireless link between the mobile electronic device (32) and the central communication network (33).

11. The system (24) according to any one of the preceding claims, **characterized in that** the memory (80) of the mobile electronic device (32) stores user preference data, the control software application being able to control the functional equipment (30) based on at least one user preference data stored in the memory (80).

12. The system (24) according to any one of the preceding claims, **characterized in that** at least one control software application is capable of controlling the functional equipment (30) without user intervention, during pairing between the mobile electronic device (32) and the local terminal (31, 34).

13. The system (24) according to any one of the preceding claims, **characterized in that** at least one control software application is capable of controlling the functional equipment (30), based on a control instruction transmitted by the user using the user interface (84) of the mobile electronic device (32).

14. The system (24) according to any one of the preceding claims, **characterized in that** the cabin (12) includes at least one first compartment (14) and at least one second compartment (16), the system (24) comprising at least one first local terminal (34) positioned in the first compartment (14) and at least one second local terminal (34) positioned in the second compartment (16), the control software application being capable of automatically controlling the functional equipment (30) in the first compartment (14) when the mobile electronic device (32) and the first local terminal (34) have been paired, without automatically controlling the functional equipment (30) in the second compartment (16), the control software application being capable of automatically controlling the functional equipment (30) in the second compartment (16) when the mobile electronic device (32) and the second local terminal (34) have been paired, without automatically controlling the functional equipment (30) in the first compartment (14).

15. A method for managing a cabin environment in a platform (10), the method including the following steps:
- providing a system (24) according to any one of the preceding claims;
- pairing the mobile electronic device (32) with the local terminal (31, 34) using the pairing assembly (35);
- transmitting at least one location identification data associated with the local terminal (31, 34);
- configuring at least one control software application, based on the transmitted location identification data;
- implementing the control software application to control functional equipment (30).
